# EUROPEAN PATENT SPECIFICATION

(11) **EP 0 873 396 B1**
(45) Date of publication and mention of the grant of the patent: **22.10.2003**
(21) Application number: 95929412.5
(22) Date of filing: 07.08.1995
(51) Int. Cl.: C12C 12/04, C12G 3/08, C12H 3/00, G01N 21/00, G01N 31/00, G01N 33/14

(54) **BREWING PRODUCTS AND THEIR METHODS FOR PRODUCTION**
Brauereiprodukte und deren Verfahren zur Herstellung
PRODUITS DE BRASSERIE ET LEURS PROCEDES DE PRODUCTION

(43) Date of publication of application: 28.10.1998
(73) Proprietor: Miller Brewing Company, Milwaukee Wisconsin 53208 (US)
(72) Inventor: TRIPP, Matthew, L., Nashotah, WI 53058 (US); RADER, Sydney, R., Fredonia, WI 53021 (US); RYDER, David, S., Libertyville, IL 60048 (US); CHAUDHARY, Vinod, K., Mequon, WI 53092 (US); MIZERAK, Robert, J., Oconomowoc, WI 53066 (US); SCHULZE, William, G., Waukesha, WI 53188 (US)
(74) Representative: Duckworth, Timothy John
(86) International application number: PCT/US95/10019
(87) International publication number: WO 97/006238

(56) References cited:
- GB-A- 1 177 126
- US-A- 4 975 297
- US-A- 5 039 346
- US-A- 5 141 611
- US-A- 5 254 474
- US-A- 5 294 450
- US-A- 5 439 699
- NORTH AMERICAN NEW PRODUCT REP0RT, Volume 17, Published 04 September 1992, pages 5 and 7.
- MALTING AND BREWING SCIENCE, Volume II, Hopped and Beer, 1982, J.S. HOUGH et al., Eds., pages 462-467 and 796.
- BREWING SCIENCE, Volume 2, 1981, J.R.A. POLLACK, Ed., pages 357-363.
- EUROPEAN BREWERY CONVENTION, PROCEEDINGS OF THE 24TH CONGRESS, OSLO, 1993, A. GRONQVIST et al., "Carbonyl Compounds During Veer Production and in Beer", pages 421-428.

## Description

### Background Of The Invention

### Technical Field

The present invention generally relates to brewing. More particularly, it relates to a novel colorless, clear beer and methods of preparing it.

### Background Art

Conventional beers are usually straw-colored or darker colored liquids. Although colorless, clear, products have been made in the past by the brewing industry, those products were not beers and they were used as a base for flavored products.

The Goldstein et al. U.S. Patent No. 4,440,795 discloses a process for the production of a stable, malt beverage which comprises subjecting a beer to reverse osmosis using a membrane having a molecular weight cutoff (MWCO) of about 200 to obtain a permeate, which consists of water, alcohol, and organics having a molecular weight of less than about 200. The permeate obtained does not possess an acceptable beer flavor but it is useful as a base to which citrus flavoring can be added to obtain a flavored malt beverage.

A second Goldstein et al. U.S. Patent No. 4,612,196 discloses a method of preparing a straw-colored beer of low alcoholic content using a reverse osmosis membrane wherein a retentate is used having a molecular weight cutoff (MWCO) of less than about 100 for organics. However, the product, the retentate portion, obtained is not a colorless, clear beer.

The recent introduction and consumer acceptance of colorless, clear, cola drinks suggests that there could be a consumer demand for a colorless, clear beverage having an acceptable beer flavor and other desirable beer characteristics.

### Disclosure Of The Invention

It is an object of the present invention to disclose a novel, colorless, clear beer having an acceptable beer flavor and other desirable beer characteristics.

It is another object of the present invention to disclose a novel, colorless, clear beer having a desirable staling resistance compared to conventional beers.

It is a further object to disclose a method of making such a clear, colorless beer.

It is still further an object to disclose a novel natural brewing product that can be used to enhance the foam characteristics of the clear beer and other malt beverages.

Still further, it is an object to disclose a method of preparing a superior tasting nonalcoholic malt beverage from a by-product of the method of making the clear beer.

It also is an object to disclose an efficient brewing method which produces both a colorless, clear beer and a nonalcoholic beer.

It is still further an object to disclose a method of improving the body and dryness of a colorless clear beer and a nonalcoholic malt beverage.

The present invention provides a method of preparing a colorless clear beer which comprises:
(a) subjecting a feed beer having from 3 to 7% w/w alcohol, 20 to 50 bitter units (BU) and a color reading of 4° to 5° SRM to ultrafiltration at a pressure of 206 to 1310 kPa (30 to 190 psi) using a membrane having a molecular weight cutoff (MWCO) of about 300 to obtain a retentate and a permeate;
(b) isolating the permeate which contains about the same level of alcohol as said feed beer and having less than 2 bitter units and a color of less than 0.1 ° SRM;
(c) adding to the permeate an effective amount of a bittering agent to obtain the desired bitter flavor;
(d) adding an effective amount of high and intermediate dextrins in the permeate to add body and dryness; and
(e) adding an effective amount of a natural beer foaming component to the permeate to produce a colorless, clear beer.

If necessary, an effective amount of a hop bittering agent may be added to the permeate to obtain the desired bitter flavor in the clear beer. Increasing the content of high and intermediate dextrins in the permeate may be used to add body, sweetness, dryness and balance.

In the preferred method of the present invention, the ultrafiltration membrane is a membrane having the same properties as the OSMOMCS MX07 300 UF polyamide/polysulfone composite membrane and the amount of high dextrins (typically found in a 10 DE syrup) and intermediate dextrins (typically found in a 26 DE syrup) is increased to about 0.5% to about 3% by weight of the final beer.

A straw-colored nonalcoholic malt beverage may also be obtained from the retentate resulting from the ultrafiltration step used to prepare the clear beer.

The invention therefore also provides a method of making a nonalcoholic malt beverage which comprises:
(a) subjecting a feed beer having from 3 to 7% w/w alcohol and a color of 4° to 5° SRM to ultrafiltration using a membrane having a MWCO of about 300 to obtain a retentate containing about 3 to 7% w/w alcohol;
(b) diluting the retentate with a diluent comprising water;
(c) increasing the concentration of high and intermediate sized dextrins in the diluted retentate; and
(d) adjusting the alcohol content, if needed, to less than 0.5% v/v to obtain a nonalcoholic malt beverage. In a particular embodiment the preparation of the nonalcoholic malt beverage comprises isolating the retentate and diafiltering (dilution followed by ultrafiltration) it with an aqueous diluent until an alcohol content of 2% (w/w) is reached. The retentate is then diluted four times with diluent to about 0.4% alcohol (w/w); increasing the diluted retentate's content of intermediate dextrins to about 1 to about 5% by weight to add body and sweetness; and then diluting the alcohol content, if needed, to about 0.5% v/v or 0.4% w/w.

The present invention also relates to a method of improving the body and dryness of a nonalcoholic malt beverage which comprises adding to said nonalcoholic malt beverage an effective amount of intermediate dextrins. Thus the body and dryness of a nonalcoholic beer may be increased by adding to nonalcoholic beer about 1% to about 5% w/w of intermediate dextrins found in a typical 26 DE syrup. The preferred intermediate dextrins are products similar to Staley 200 or 225 which is available from the E.F. Staley Co. of Decatur, Illinois.

A still further aspect of the present invention provides a method of making a colored beer which comprises preparing a colorless clear beer of the invention and adding a beer coloring. Thus a stable colored beer may be obtained.

It will be apparent to those skilled in the art from the description which follows that the stated objects and other advantages can be achieved by practice of the present invention.

### Brief Description Of The Drawings

Fig. 1 depicts a flow chart of the present invention using as a basis 1000 barrels of feed beer;
Figs. 2a and 2b are HPLC analyses of a fresh and an aged beer;
Figs. 3a and 3b are HPLC analyses of a fresh and a severely staled beer;
Fig. 4 is an HPLC analysis of a clear malt beverage;
Fig. 5 is a taste test ranking of staled beers; and
Fig. 6 is staling peak height ranking of staled beers.

### Best Modes For Carrying Out The Invention

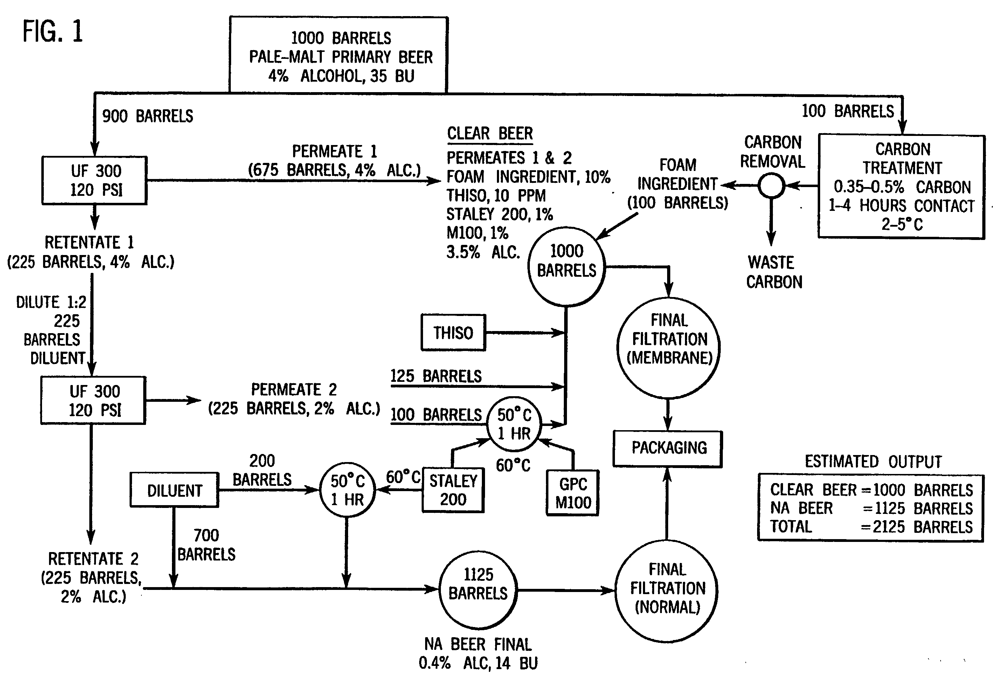

Referring to Fig. 1, in the preferred method of the present invention both a clear beer and a nonalcoholic malt beverage (NA) are co-produced. By using the preferred method, for example, 1000 barrels of a feed beer (4% alcohol) can be converted into 2125 barrels of final product (1000 barrels of the clear beer and 1125 barrels of nonalcoholic beer).

For purposes of illustration, the preferred method is described starting with 1000 barrels feed beer (4% alcohol, 35 BU). 100 barrels of the feed beer are carbon treated and filtered to remove the carbon and obtain a filtrate for use as a natural beer foaming component. The remaining 900 barrels of the feed beer are concentrated 4 fold via ultrafiltration with the preferred membrane to obtain 675 barrels of a 1st permeate (4% alcohol) for preparing the colorless, water-white, clear beer and 225 barrels of a retentate (4% alcohol). In other words, the beer components retained by the ultrafiltration membrane have a 4 fold greater concentration in the retentate than they do in the feed beer by virtue of the respective volumes of feed beer to retentate (900 barrels:225 barrels or 4:1). The retentate is diluted to two times with diluent water, and the 450 barrels of diluted retentate is subjected to ultrafiltration using the same type of membrane. The 225 barrels of the 2nd permeate (2% alcohol) are used as described herein to make the clear beer and the 225 barrels of the retentate (2% alcohol) is used for preparing the NA beer.

To formulate the colorless, water-white, clear beer the following are blended:
675 barrels of permeate 1 (4% alcohol)
225 barrels of permeate 2 (2% alcohol)
100 barrels of the carbon treated feed beer (4% alcohol)
1% final concentration of intermediate dextrin (Staley 200)
1% final concentration of high dextrin (GPC M100)
10 ppm final concentration of the light stable hop extract, tetrahydroisohumulone (THISO)
One product obtained is 1000 barrels of a colorless, water-white, clear beer (3.5 w/w alcohol, 10 BU). To formulate the nonalcoholic (NA) malt beverage the following are blended:
225 barrels retentate (2% alcohol, 40 BU)
900 barrels diluent water
4% intermediate dextrin (Staley 200)
The second product obtained is 1125 barrels of a nonalcoholic (NA) beer (0.4% w/w alcohol; 14 BU).

The grand total of the colorless, water-white, clear beer and the nonalcoholic (NA) beer is 2125 barrels.

The feed beer may be a commercial beer or a specially brewed pale beer. Several different commercial beers have been used as the starting material. For example, a 80 - 100% pale malt beer having a color of about 4° to about 5° SRM may be used. However, a 100% pale malt beer having a color of about 4° to about 5° or less than 5° SRM is preferred.

The properties of the ultrafiltration membrane to be used in the process of the present invention are important. The membrane must permit ethanol to pass therethrough. If the membrane pore size is too large (e.g., MWCO 500), the permeate, which is used to make the clear beer will be too colored and not acceptable. Also, if the membrane is too tight, the permeation rate will be intolerably slow and important flavor components in the feed beer will be retained, resulting in an unpleasant, unbalanced, and unacceptable permeate. The permeation rate is a function of the characteristics of the starting beer and filter membrane. A membrane with a nominal 300 molecular weight cut-off range and with the same properties as the OSMONICS MX07 UF300 polyamide/polysulfone composite membrane is preferred.

It also has been found that the flavor of the permeate and the colorless, clear beer and the retentate and the resulting nonalcoholic malt beverage are influenced by the flavor of the feed beer. The greater the flavor of the feed beer, the more flavorful the permeate and retentate. For example, permeates made from highly hopped feed beers (e.g., 35 BU Cascade hops) have proportionately more hop flavor. Similarly, permeates with greater malt flavor are obtained when 100% malt was used in place of an adjunct such as syrups. The preferred feed beers are 100% pale malt brews which give water-white permeates. It is apparent that important beer flavor molecules permeate the membrane, and their concentration can be increased, decreased, and changed by changing the brewing ingredients and levels of ingredients and regime.

An excellent, natural beer foam for the colorless, water-white, clear beer can be made using natural beer foaming components made by a variety of processes, including cold contact of water with ground malt followed by carbon treatment to reduce color (5% use level), carbon treatment of the preferred ultrafiltration retentate (4% use level), carbon treatment of Brewer's yeast extract (2-10% use level), or carbon treatment of the feed beer (6-12% use level).

The natural beer foaming components made by the cold contact with malt process, while imparting excellent foam to the beer, requires special equipment and may impart a biscuit off-flavor to the final product, therefore it is less preferred. The natural beer foaming components made by carbon treating the retentate also produces excellent foam and adds desirable malty flavor, however the removal of carbon from the viscous retentate can be difficult and requires special equipment. The preparation of the Brewer's yeast extract requires special equipment. Therefore they are less preferred.

The preferred natural beer foaming components are made by the carbon treating of a portion of the feed beer and removing the carbon with filtration to obtain a product which when added to the permeate at 6 - 12% w/w imparts excellent foam and a malty flavor. Furthermore, removal of the carbon from the feed beer can be accomplished using filtration employed in normal brewery operations or any one of a variety of filtration devices and is a relatively easy task.

The carbon for use in the method of making the natural beer foaming components is preferably a food grade activated carbon. An acceptable carbon is DARCO KBB made by American Norit Company, Inc., 1050 Crown Pointe Parkway, Suite 1500, Atlanta, Georgia 30338. The quantity to be used is preferably about 0.25 to about 1.0% by weight or about 0.30 kg (0.67 lbs) to about 1.21 kg (2.68 lbs) per barrel of feed beer which is calculated as follows: 0.25% is 2.5 g/L x 3.785 L/gallon x 31.5 gallons/barrel x .0022 lb/g = 0.672 lbs./barrel (or 0.30 kg/barrel). The carbon is kept in the feed beer for a period long enough to absorb color bodies and to reduce the color to the desired level (e.g. at least about 2 minutes). The carbon is then removed using any one of a variety of filtration devices, such as a Millipore membrane filter (38 L scale), which is available from the Millipore Filter Corporation of Bedford, Massachusetts.

The use of diatomatous earth (DE) as a filter aid is to be avoided because it tends to remove proteins beneficial to foam formation. Similar foam losses resulted when cellulosic pads containing DE were used. It also has been found in making the clear beer, that the use of diatomatous earth (DE) as a filter aid in the removal of carbon or as a final polishing filter prior to packaging results in a dramatic reduction in foam, presumably due to protein removal. Therefore, it is not recommended.

Although a cellulose filter aid is preferred at plant scale to remove carbon, the Millipore type membrane filters (38 L scale) are preferred at lab scale because they can be used both to remove the carbon from the foaming component and as a final filter for the beer without having any effect on foam amount and quality.

We also have discovered that a more desirable beer-like body and dryness can be produced in either the clear beer or a nonalcoholic malt beverage by increasing the concentration of dextrins. A combination of intermediate dextrins (e.g. Staley 200 or 225) to provide body and high molecular weight dextrins (e.g. GPC's M100 Maltrin) to provide body and dryness are used to make the preferred colorless, clear beer at levels of about 1% by weight each. The preferred dextrins content for the nonalcoholic malt beverage is obtained by adding about 1 - 5% by weight of the intermediate dextrins (Staley 200 or 225).

The bitterness of the colorless, water-white, clear beer and the nonalcoholic beer can be important. During the ultrafiltration step of the preferred method of the present invention using highly hopped feed beers (20 - 45 BU), a 30 - 50% loss of bittering units (BUs) occurs, resulting in a less bitter retentate than expected. Levels of BUs in the permeate are typically below the level of meaningful detection (<2 BU). Carbon treatment of the feed beer also removes BUs to a point below detection resulting in a light stable fraction.

In making the clear beer a hopping material is added to obtain the desired BU level prior to the final filtration. The preferred hopping material is tetrahydroisohumulone (THISO) disclosed in U.S. Patent No. 4,644,084. When it is used as the source of bittering, the light stability of the colorless, clear beer is not an issue.

A variety of nonalcoholic (NA) beers can be made using the retentate from the ultrafiltration of the preferred method. The retentate which would normally be a waste stream produces nonalcoholic malt beverage which are beer-like with little or no wortiness.

In the preferred method of improving the body and dryness of a nonalcoholic malt beverage the dextrose and intermediate dextrin contents are increased. The result is an NA beer which has the desired sweetness, body and dryness and which is balanced without any excess bitterness. One method of accomplishing this is to use glucoamylase (GA) at about the same level (e.g. 882 units GA/liter; 1 unit is 1 micromole of dextrose liberated per minute at pH 4.3 using a 10 DE starch) that the GA is used in making a light beer, followed by a residence time of about 4 - 8 days depending on the degree of attenuation desired (4 days, 0.5% dextrose; 8 days, 1% dextrose), and followed by flash pasteurization. The resulting nonalcoholic malt beverage has a rich, creamy, well balanced character. Most preferably, glucoamylase is added directly to the diluted retentate.

A second method of improving the body and dryness of a nonalcoholic beer is to increase the dextrose and intermediate dextrin content of the nonalcoholic malt beverage by simply adding low and intermediate sized dextrins to add body, sweetness, and balance. It has been found that the addition of 1-5% intermediate dextrins (Staley 200 or 225) results in a full bodied, nicely balanced nonalcoholic malt beverage. The increase in dextrose and intermediate dextrin content by either the use of GA or the addition of intermediate dextrins provides a method for making a wide range of nonalcoholic malt beverages of improved properties.

The practice of the invention is further illustrated by the examples.

### EXAMPLE 1

### Preparation of Feed Beer

A wort (12.5° Plato) was prepared from the following ingredients:

| | |
|---|---|
| Pale Malt, lbs. | 21,100 |
| Foundation Water, bbl. | 180 |
| Sponge Water, bbl | 94 |
| Chase Water, bbl | 2 |
| CaSO₄ lbs. | 30 |
| CaCl₂, lbs. | 26 |

The ingredients were mashed at 46°C (115°F) for 20 minutes, the temperature raised to 69°C (156°F) and held for 30 minutes and raised to 77°C (170°F) and held for 5 minutes. The mixture was transferred to a lauter tun and boiled for 60 minutes. It was kettle hopped with 100% Cascade hops 56.6kg (125 lbs.) to 33.5BU. It was aerated and pitched at about 10 million cells/cc, of Saccharomyces uvarum and fermented at a constant 60°F (15.5°C). The yeast concentration reached a maximum of 7.35 grams/liter (dry weight basis). About 190 hours were required to complete the fermentation. The feed beer obtained had a conventional lager beer taste with the exception that it had more hop flavor and aroma and bitterness than many typical lager beers. The finished feed beer contained about 3.65% w/w alcohol (4.67% by volume); had a BU level of 33.5, was pale straw-colored (4.5° SRM) and had a specific gravity of 1.0102.

### EXAMPLE 2

### Ultrafiltration of Feed Beer

The feed beer of Example 1 is concentrated by ultrafiltration using an OSMONICS MX07 UF300 membrane at 827kPa (120 psi). When only a colorless, water-white, clear beer is desired, the beer can be concentrated up to 10 fold with the resulting permeate being the base. When an NA malt beverage is being co-produced, only a 4 fold concentration is preferred so as not to deplete the retentate of important beer flavor compounds. In other words, the beer components retained by the ultrafiltration membrane have a 10 fold or a 4 fold greater concentration in the retentate than they do in the feed beer by virtue of the respective volumes of feed beer to retentate (10:1 or 4:1, respectively). The retentate can be diluted with diluent water in equal parts to the retentate (1:1), subjected to a second ultrafiltration and the second permeate added back to the clear beer. As a result no alcohol is lost to waste.

### EXAMPLE 3

### Preparation of Colorless, Clear Beer

To a permeate obtained by the ultrafiltration process of Example 2 there is added 1% by weight of intermediate dextrins and 1% by weight of high dextrins. At plant scale, the syrups can be mixed by adding them slowly to the front end of a circulation pump in a typical circulation loop. At laboratory or pilot scale to facilitate the mixing of the intermediate and high dextrins (Staley 200 and M100 Maltrin) with the permeate, a mixture is prepared (10% Staley 200 and 10% GPC's M100) in a portion of the permeate, and dissolved by heating to 49°C (120°F) for 30- 60 minutes to form a concentrate. This concentrate is then added to the permeate to a final formulation concentration of 1% Staley 200 and 1% GPC M100. The natural beer foaming component prepared by carbon treatment of the feed beer (as described in Example 5) is added at 10% to impart foam. The formulation is completed by adding the hopping material tetrahydroisohumulone (THISO) to a final concentration of 10 ppm. The colorless, water-white, clear beer is then final filtered prior to packaging using a 0.45 micrometer membrane filter.

A typical clear beer obtained by the preferred method of the invention has the following composition:

| | |
|---|---|
| Alcohol, % w/w | 3.65 |
| Alcohol, % v/v | 4.56 |
| Real Extract, % w/w | 2.25 |
| Extract/Alcohol | 0.63 |
| Orig Gravity, Calc. | 9.26 |
| App Extract, % w/w | 0.61 |
| Specific Gravity | 1.00236 |
| Calories/12 oz | 120 |
| pH | 4.7 |
| Color, SRM | 0.2 |
| BU | 8.2 |
| Initial Clarity | 40 |

### EXAMPLE 4

### Stability Testing of Malt Beverages

Polyphenol compounds were considered as possible marker candidates since they are strong antioxidants and would be expected to change in concentration as beer ages. Two important authors that have used HPLC techniques to examine polyphenols are Asaf Qureshi at the USDA Barley and Malt Laboratory, Madison, WI in the early 1980s, and Ian McMurrough at Arthur Guinness Sons & Co., Dublin, Ireland in the 1990s. Qureshi identified about eighteen polyphenols, mostly monomers, in bottled beers. He found the concentrations of the polyphenols to be in the ug/mL (ppm) range and to vary with storage time (Qureshi, A., Journal of the American Society of Brewing Chemists 37:161, 1979). McMurrough emphasized the monomer, (+)-catechin; two dimers, prodelphinidin B3 and porcyanidin B3; and four trimers which he also detected in the ppm range (McMurrough, I., Ferment 7(3):175, 1994). Both authors used HPLC with 280 nm detection, and later McMurrough used electrochemical detection.

We have, however, discovered that 5-(hydroxymethyl)-2-furfural (HMF) is a very important staling marker in beer. The peak as detailed in the HPLC method of this example was confirmed by comparison to a known sample of HMF.

### A. Materials & Methods

An HPLC method was developed to analyze HMF found in beer, water extracts of malt, water extracts of hops, malt beverages, teas, and coffees:
HPLC: HP Model 1050 with autosampler
Solvents:
   A: 5%/95% CH₃CN/H₂O + 0.1% TFA
   B: 25%/75% CH₃CN/H₂O + 0.1% TFA
   C: 100% CH₃CN + 0.1% TFA
Detector: Isco Model UA-5 UV 280 to 310 nm
Solvent Program: 100% A 0 to 10 minutes, Linear Ramp to 100% B 10 to 40 minutes, 100% B 41 to 60 minutes, 100% C 61 to 86 minutes.
Sample Volume: Typically 20 uL Degassed Beer
External Standard: (+)-Catechin
Solvent Flow Rate: 0.2 mL/min
HPLC Column: Whatman EQS 5 u S 100A C18 4.6 x 150 mm

The slow flow rate of 0.2 mL/min permits interfacing the HPLC with a Finnigan TSQ 700 mass spectrometer. When the mass spectrometer is not needed, considerably faster flow rates (^{~} 1 mL/min) are possible with resulting shorter analysis time (^{~} 20 min).
Preparative HPLC Column: Altex Ultrasphere ODS C18 5u 10 x 2500 mm
Flow.Rate: 1.6 mL/min

### B. Results and Discussion

### 1. Initial Experiments

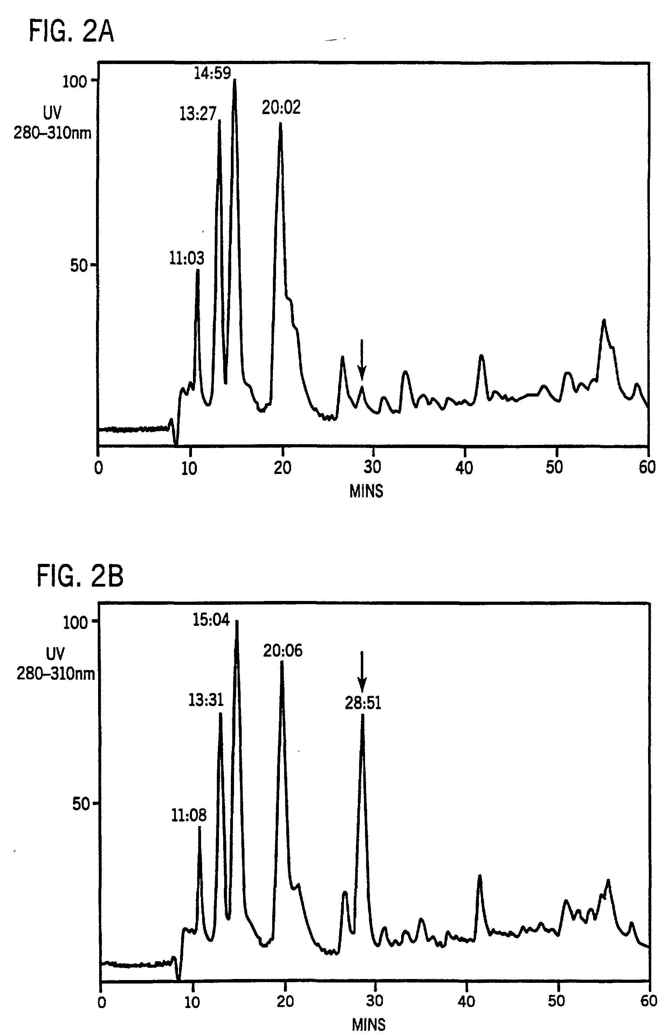

Fresh MILLER GENUINE DRAFT (MGD) was compared to grossly staled MGD to see if any differences could be found in the HPLC HMF elution range. Figs. 2a and 2b compare an 8 week old MGD stored at 2°C (36°F) (Fig. 2a) to a 16 week old MGD stored at 29°C (85°F) (Fig. 2b). A large increase in the peak at 28:51 minutes is readily noticeable and was confirmed to correspond with 5-(hydroxymethyl)-2-furfural (HMF). This peak is hereinafter referred to as the "staling peak". Some other minor differences are also detectable in Figs. 2a and 2b. Note that the HMF may elute at different times depending on the HPLC conditions. Identification of the HMF peak can be accomplished by using an HMF standard.

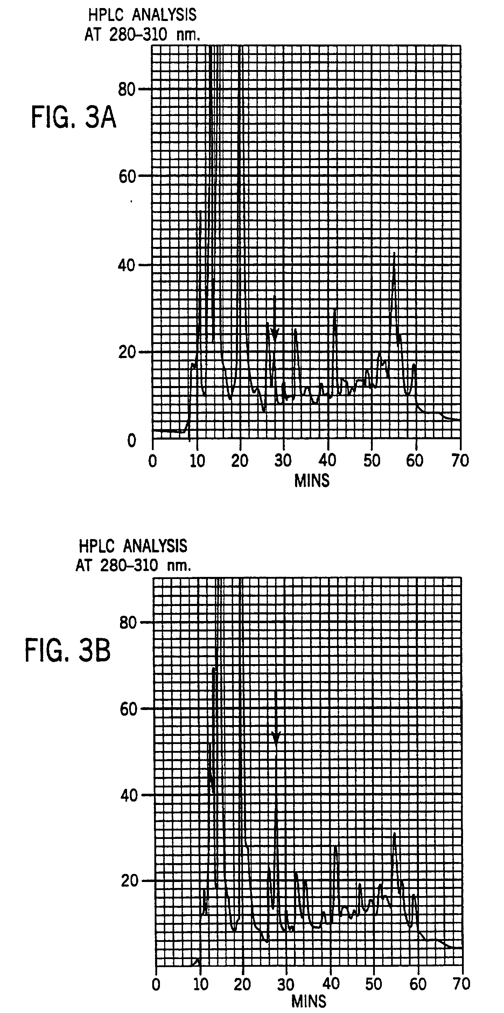

Increasing oxidation by bubbling air through a small amount of beer or by addition of hydrogen peroxide to beer did not increase the intensity of the staling peak. HMF staling peak intensity was found to be very temperature sensitive. Figs. 3a and 3b are a comparison of MGD before (Fig. 3a) and after (Fig. 3b) heating. A "Severe Staling Test" was developed which consists of heating a predetermined volume of beer (preferably 10 ml) to dryness at 75°C for 6 hours. Water is then added back to the original predetermined volume (preferably 10 ml). Note that other volumes can be used; however, the drying time will be affected accordingly. A four-fold increase in staling peak height typically results from this test as seen in Figs. 3a and 3b. The severe staling test can be used to predict how well a beer withstands staling or it can be used to indicate the impact of experimental additives.

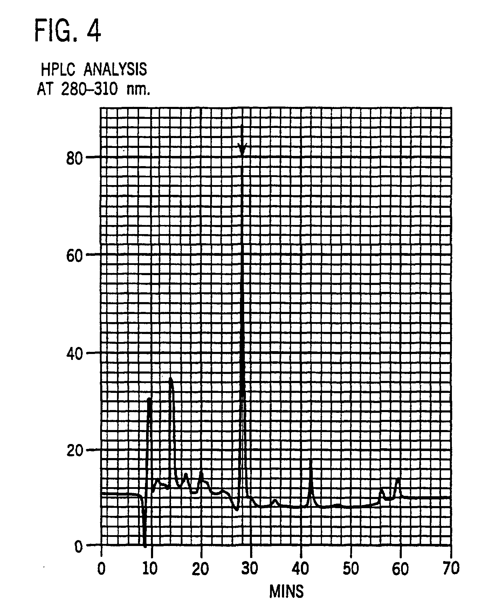

The source of the staling peak was found to be malt. Malt is used in beers at much higher levels than hops and heated water extracts of malt produced a large staling peak, whereas heated (or unheated) water extracts of hops did not. Malt beverages, such as QUBE or ZIMA, produced very large staling peaks (Fig. 4) even before heating.

### 2. Staling Peak Correlates with Sensory Oxidation Ratings

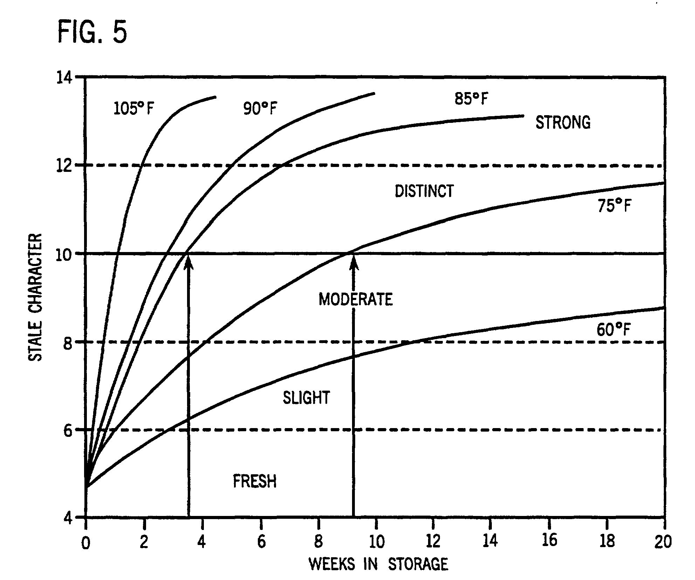

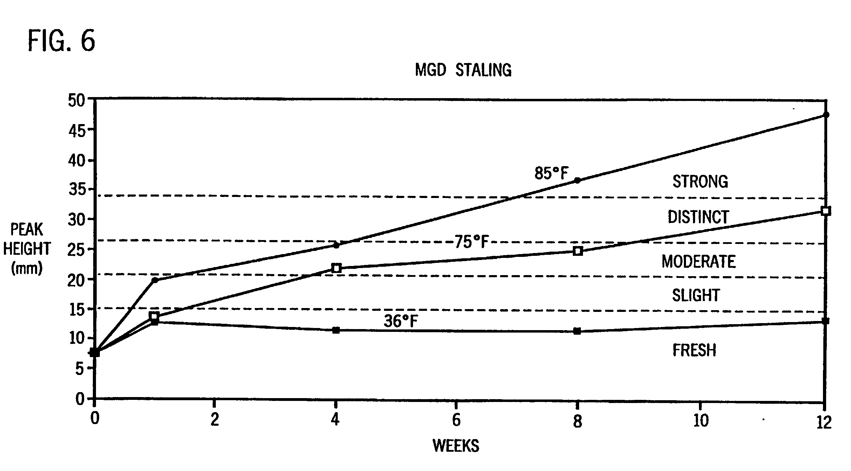

Fig. 5 plots the Sensory Taste Test Panel scores for oxidation of MGD vs. time at various temperatures. The panel oxidation scores were ranked as "fresh, slight, moderate, distinct, and strong". Fig. 6 plots the height of the staling peak for MGD vs. time at various temperatures. A duplication of the panel scores was obtained in Fig. 6 by adjusting the range of the "fresh" to "strong" rankings. Both Figs. 5 and 6 show the importance of keeping beer at cold temperatures to preserve freshness.

### C. Applications

### 1. Survey of Products

**TABLE 1**

| Staling Peak Height (mm) | | | | | |
|---|---|---|---|---|---|
| | Refrigerated at 2 to 5°C (36 to 41°F) | | | | Severe Staling Test 10 mL Product Heated |
| Product | Fresh | 4 wks | 8 wks | 1 yr or > | 6 hr at 75°C |
| MGD | 8 | 12 | 12 | | 40 |
| Miller High Life (MR) | 11 | | 18 | | 50 |
| Unhopped MR | | 14 | | | 56 |
| Milwaukee Best | | 10 | | | 29 |
| Lowenbrau | | 14 | | | 30 |
| Miller Lite | | 16 | | | 34 |
| ZIMA | | | | 68 | 490 |
| Example 3 Beer | | | | 8 | 8 |
| (Clear Beer) | | | | | |

Table 1 is a survey of products displaying the staling peak height obtained by HPLC analysis. Smaller peak height corresponds to fresher product. We have discovered that the clear beer of the present invention (Example 3) retains its freshness better than most commercial beers. This is confirmed by the low value (8 mm) of the staling peak for 2 year old sample of the beer of Example 3. Even after the severe staling test, the beer of Example 3 has a value of only 8 mm. At the other extreme, malt beverages have very high staling peak values. One major difference between malt beverages and beers is pH. Malt beverages have a pH of about 3.0 compared to about 4.3 for beers. When the pH of MGD was lowered to 3.0 with sulfuric acid the severe staling test gave a value of 168 mm or about four times more than MGD at normal pH. This result agrees with previous studies which have shown that lower pH in beers increases staling.

### 2. Identification of the Staling Peak

Concentrates of the staling peak were obtained by preparative HPLC and the staling peak was identified as 5-(hydroxymethyl)-2-furfural by electron impact, chemical ionization, and electrospray analysis on a Finnigan TSQ 700 mass spectrometer.
5-(hydroxymethyl)-2-furfural, or HMF, has been known to be in beer for many years (McDougall, J., et al., "Studies on Furfural and 5-Hydroxymethyl Furural in Beer", JASBC pp. 48-51, 1963) and has been widely used as a marker for beer staling since the mid 1970s (Davis, D., et al., "Application of HPLC to the Solution of Flavor Problems in Beer Caused by Low-Volatile Compounds", JASBC pp. 55-59, 1976).

Approximately 13 mm HMF peak height equals 1 mg/L or 1 ppm HMF. The severe staling test (6 hrs at 75°C) results for the beer of Example 3 and Miller High Life are:
Example 3 Beer = 0.6 ppm HMF
Miller High Life = 3.8 ppm HMF

### D. Conclusions

The staling marker peak found in beer is very temperature sensitive and can be thought of as an internal recording thermometer for beer. It mimics sensory panel results for oxidation of MGD and it can be analyzed by a simple and fast HPLC method with UV detection.

Applications included the ranking of staling potential of various products based on the development of a "Severe Staling Test".

In general, a preferred HMF peak height is less than 20 mm when refrigerated 2-5°C (36° - 41°F) for 8 weeks. A more preferred peak height is less than 15 mm while a most preferred peak height is less than 8 mm.

Using the severe staling test (6 hrs. at 75°C) of the present invention a preferred HMF peak height is less than 40 mm. A more preferred peak height is less than 20 mm while a most preferred peak height is less than 8 mm.

### EXAMPLE 5

### Identification of Source of Staling

### A. Introduction

As shown in Example 4, the clear beer of the present invention as detailed above is significantly less prone to oxidation than conventionally formulated beers. The clear beer is formulated from the permeate stream of an ultrafiltered pellet-hopped beer as illustrated in Example 3. The resulting permeate is combined with carbon-treated base beer which served as the foam ingredient (FI) (see Example 8 below), two starch adjuncts, Maltrin M100 and Staley 225, and Hydrohop (the percentages are shown in section C and Table 2 below). Maltrin M100 is a product manufactured by Grain Processing Corp., Muscatine, Iowa. Staley 225 is a product manufactured by A.E. Staley Manufacturing Co., Decatur, Illinois. Hydrohop is a product manufactured by Watertown Hops Co., Watertown, Wisconsin. Hydrohop is a light stable bittering agent (tetrahydroisohumulones) prepared by the solvent extraction of hops or hop pellets.

The objective of the following work was to determine if the resistance to staling (i.e., oxidation) is due to an ingredient adjunct, to a synergistic combination of ingredient adjuncts, or to the ultrafiltration process itself--that is, whether normal beer staling precursors are removed by ultrafiltration.

### B. Protocol

A stock beer from the Milwaukee Plant underwent a 4-fold concentration across three 41 inch MX07 Ultrafiltration cartridges from OSMONICS (Minneapolis, MN) plumbed in series and having a nominal cutoff of approximately 300 daltons. The permeate stream was evaluated as is and following a 10% (v/v) addition of the FI. In addition, the two starch adjuncts, Maltrin M100 and Staley 225, were added separately and in combination at 1% (w/v) to the permeate + FI composite. A total of nine beers (listed below) were evaluated organoleptically following a protracted abuse test (3 weeks at 100°F) by panelists trained to discern oxidative defects in beer.

### C. Beers Evaluated by Panelists

### # Beer Fraction

1. Starting Beer
2. Permeate, 4X Concentration
3. 50% Permeate + 50% Retentate (v/v)
4. Retentate, 4X Dilution
5. Permeate (90%) + FI (10%) (v/v)
6. Beer #5 + Maltrin M100 (1%) (w/v)
7. Beer #5 + Staley 225 (1%) (w/v)
8. Beer #5 + M100 (1%) + Staley 225 (1%) (w/v)
9. Permeate + Hops (16 BU's)

### D. Organoleptic Evaluation

Each abused beer was evaluated for oxidative character against an unabused control (the same beer stored cold at 5°C (41°F). Beers were evaluated on a standard 24 point scale by panelists especially trained to discern differences in oxidative character. The oxidative mean, the increase in perceived oxidation, for each beer was then calculated. A Duncan's Multiple Range Test was used to analyze the variance to determine the significant differences between the beers at a 95% confidence level (i.e., alpha = 0.05). See Duncan, D.B., "Multiple Range and Multiple F Tests", 11 Biometrics 1-42 (1955) and Duncan, D.B., "Multiple Range Test for Correlated and Heteroscedastic Means", 13 Biometrics 164-176 (1957).

### E. Results

The oxidative scores (on a 24 point scale) for the nine sets of beers were evaluated. The calculated oxidative mean for each beer, as well as, the difference between each special and corresponding control are shown in Table 2. Finally, the Duncan grouping of statistically like beers having the same perceived increase in oxidation develop during the three week storage at 38°C (100°F) is shown in Table 3.

Table 3 shows that beers 4, 1, and 3 and beers, 5, 6, and 7 were not significantly different in oxidation and conversely, that beers 4, 1, and 3 were significantly more oxidized than beers 5, 6, and 7. This indicates the following:
- When the retentate stream was diluted back 4-fold (#4) to the same concentration as the starting beer (#1), it underwent the same amount of oxidation as the starting beer.
- When the permeate stream was combined with either the FI (#5) alone or in combination with the either starch adjunct, Maltrin M100 (#6) or Staley 225 (#7), beers were significantly less prone to oxidation. However, the starch adjuncts themselves did not have an impact on the level of oxidation.
- The common element in Beers 4, 1, and 3 which were found to be significantly more oxidized was that they all contained the retentate stream.

**TABLE 2**

| **Oxidation Mean Values** | | | |
|---|---|---|---|
| | Oxidation Mean Values | | |
| # Beer Fraction | Control | Abused | Difference |
| 1. Starting Beer | 3.5 | 17.25 | 13.75 |
| 2. Permeate, 4X Concentration | 4.25 | 14.75 | 10.5 |
| 3. 50% Permeate + 50% Retentate | 3.75 | 17.375 | 13.625 |
| 4. Retentate, 4X Dilution | 3.25 | 17.125 | 13.875 |
| 5. Permeate (90%) + FI (10%) | 4 | 13.625 | 9.625 |
| 6. Beer #5 + M100 (1%) | 4 | 13.25 | 9.25 |
| 7. Beer #5 + Staley 225 (1%) | 4.5 | 13.25 | 8.75 |
| 8. Beer #5 + M100 (1%) + Staley 225 (1%) | 3.75 | 14.25 | 10.5 |
| 9. Permeate + Hops (16 BU's) | 3.125 | 13.875 | 10.75 |

**TABLE 3**

| **Correlation of Beer (Based on Oxidation)** | | | | | | | | | |
|---|---|---|---|---|---|---|---|---|---|
| Beer | 4 | 1 | 3 | 9 | 2 | 8 | 5 | 6 | 7 |
| Duncan Grouping | A | A | A | A | A | A | | | |
| | | | | B | B | B | B | B | B |

### F. Conclusion

The results indicate that the oxidative precursors responsible for oxidation are retained in the retentate stream of the ultrafiltration process. Whenever the retentate stream was used in a beer formulation, the beer was more oxidized, and in some cases significantly more oxidized, than in beers where it was omitted.

### EXAMPLE 6

### Preparation of Stable Colored Beer

A beer coloring, such as Emkamalt, can be added to the colorless, clear beer of the present invention to produce a stable beer with a coloring comparable to conventional beers. Emkamalt is a product manufactured by Williamson Food Ingredients, Louisville, Kentucky.

Three samples of diluent plus Emkamalt (pH adjusted to 4.2) were analyzed for 5-(hydroxymethyl)-furfural (HMF) content:

| | HMF (ppm) | |
|---|---|---|
| | No Heat | 6 hr, 75°C |
| Diluent + Emkamalt (SRM = 2.2) (Low Color) | 0 | 0 |
| Diluent + Emkamalt (SRM = 3.5) (Same as MGD) | 0 | 0 |
| Diluent + Emkamalt (SRM = 23) (Same as Lowenbrau Dark) | 0.5 | 0.5 |

Two samples of the clear beer of the present invention were also analyzed for HMF:

| | HMF (ppm) | |
|---|---|---|
| | No Heat | 6 hr, 75°C |
| Clear Beer (2 years 4°C (40°F)) | 0.6 | 0.6 |
| Clear Beer (2 years 4°C (40°F)) + Emkamalt (SRM = 23) | 0.9 | 1.0 |

These results show that Emkamalt contributes very little HMF to clear beer. Thus, clear beer plus Emkamalt is a full colored beer which is nearly as stable as clear beer.

Other beer colorings can also be used such as Torrax Super 55 manufactured by Rhone-Poulenc, United Kingdom and RG15 manufactured by Pure Malt Products Ltd., United Kingdom. Generally speaking, any preparation from roasted barley and roasted malt (derived from solvent extractions with possible further concentration) and/or compatible caramel colors may be used.

### EXAMPLE 7

### Nonalcoholic Malt Beverage Retentate

A 20-40% solution of intermediate dextrins (Staley 200) is made up in diluent water by heating at 120°C for 30 - 60 minutes, and then added to the diafiltered retentate (2% alcohol) from Example 2 to a final product concentration of 4%. The retentate is further diluted to 0.4% w/w alcohol, and the product is final filtered and packaged as for a regular nonalcoholic malt beverage.

### EXAMPLE 8

### Preparation of Natural Beer Foaming Component

A portion of the feed beer of Example 1 is treated with 0.25 - 1.0% Darco KB-B carbon (pre-slurried with 60°C water) at -1 - 5°C for a minimum contact time of 2 minutes (up to a 12 hour contact time has been found to be acceptable). The carbon is then removed by filtration for example using a 0.45 micrometer (0.8 µm, carbon fines bleed through) membrane filter (Millipore type HA nitrocellulose). (With this filter, 100 barrels of 0.35% - 0.5% carbon treated primary beer can be filtered in 8 hours using 34.8 square metres (375 square feet) of membrane.) The decolorized natural beer foaming component (color less than 1.0° SRM) is held until required.

### EXAMPLE 9

### Preparation of Natural Beer Foaming Component From Malt

Conventional brewer's malt is ground and mixed with 1 to 5 parts water to 1 part malt at 1° to 15°C. The resulting mash is strained and centrifuged with the sediment being discarded. A clear supernatant is diafiltered four times using an OSMONICS UF 3000 membrane to remove unwanted color and flavor. The permeates are discarded. The retentate is concentrated, pasteurized for 15 minutes at 65° C and centrifuged to obtain a clear supernatant fluid which can be used as a natural beer foaming component. The supernatant fluid can be further treated with carbon to improve its foaming properties.

### EXAMPLE 10

### Preparation of Natural Beer Foaming Component From Retentate

To a retentate obtained from the ultrafiltration process of Example 2 there is added 0.5 to 2% Darco KB-B carbon (pre-slurred with 60° C water) at -1 to 85° C for a minimum contact time of 2 minutes up to 1 hour. The carbon is removed in the same manner as set forth in Example 5 to result in a similar decolorized natural beer foaming component which is held until required.

### EXAMPLE 11

### Preparation of Natural Beer Foaming Component From Brewer's Yeast

To a permeate obtained from the ultrafiltration process of Example 2 there is added a carbon treated Brewer's yeast extract. The Brewer's yeast is disrupted by any one of a variety of methods, for example, shaking with glass beads or disruption using a Gallun homogenizer. The extract is clarified by centrifugation and the supernatant is treated with Darco KB-B carbon in the same amount and manner as set forth in Example 7 and the carbon removed from the Brewer's yeast extract in the manner set forth in Example 5 to result in the natural beer foaming component.

It will be readily apparent to those skilled in the art that a number of modifications and changes may be made without departing from the scope of the present invention. Therefore, it is intended that the invention only be limited by the claims.

### Industrial Applicability

The above processes can be used to make stable colorless or colored beers, monalcoholic malt beverages, and natural beer foaming components. A process is also provided which can test the stability of malt beverages on an accelerated basis.

## Claims

1. A method of preparing a colorless, clear beer which comprises:
(a) subjecting a feed beer having from 3 to 7% w/w alcohol, 20 to 50 bitter units and a color reading of 4 ° to 5 ° SRM to ultrafiltration at a pressure of 206 to 1310 kPa (30 to 190 psi) using a membrane having a molecular weight cutoff (MWCO) of about 300 to obtain a retentate and a permeate;
(b) isolating the permeate which contains about the same level of alcohol as said feed beer and having less than 2 bitter units and a color of less than 0.1° SRM;
(c) adding to the permeate an effective amount of a bittering agent to obtain the desired bitter flavor;
(d) adding an effective amount of high and intermediate dextrins in the permeate to add body and dryness; and
(e) adding an effective amount of a natural beer foaming component to the permeate to produce a colorless, clear beer.

2. A method according to claim 1 in which the membrane is a polyamide/polysulfone composite membrane.

3. A method according to claim 1 or 2 in which the amount of bittering agent added is enough to impart a reading of 4 to 40 bitter units to the final beer.

4. A method according to claims 1, 2 or 3 which the high and the intermediate dextrins content is increased to 0.5 to 3% by weight of the final beer.

5. A method according to any one of the preceding claims in which the feed beer is brewed from 80-100% pale malt and wherein the feed beer has a color of 4° to 5° SRM.

6. A method of making a nonalcoholic malt beverage which comprises:
(a) subjecting a feed beer having from 3 to 7% w/w alcohol and a color of 4° to 5° SRM to ultrafiltration using a membrane having a MWCO of about 300 to obtain a retentate containing about 3 to 7% w/w alcohol;
(b) diluting the retentate with a diluent comprising water;
(c) increasing the concentration of high and intermediate sized dextrins in the diluted retentate; and
(d) adjusting the alcohol content, if needed, to less than 0.5% v/v to obtain a nonalcoholic malt beverage.

7. A method according to claim 6 in which the concentration of glucose, low and intermediate dextrins in the retentate is increased by adding glucoamylase to the retentate.

8. A method according to claim 6 in which the concentration of glucose, low and intermediate dextrins is increased in the retentate by adding a 26 DE syrup.

9. A method according to any one of claims 6 to 8 wherein the content of intermediate dextrins in the diluted retentate is increased to from 1 to 5% by weight.

10. A method of improving the body and dryness of a nonalcoholic malt beverage which comprises adding to said nonalcoholic malt beverage an effective amount of intermediate dextrins.

11. A method according to claim 10 which comprises adding 1 to 5% by weight of intermediate dextrins.

12. A method of making a colored beer which comprises preparing a colorless clear beer by a method according to any one of claims 1 to 5 and adding a beer coloring.

## Patentansprüche

1. Verfahren zur Herstellung eines farblosen, klaren Biers, umfassend folgende Stufen:
(a) ein Bier mit 3 bis 7 % (Gew./Gew.) Alkohol, 20 bis 50 Bittereinheiten und einer Farbablesung von 4° bis 5° SRM wird bei einem Druck von 206 bis 1310 kPa (30 bis 190 psi) unter Verwendung einer Membran mit einer Molekulargewichtetrenngrenze (MWCO = molecular weight cutoff) von etwa 300 ultrafiltriert, wodurch man ein Retentat und ein Permeat erhält;
(b) das Permeat, das den gleichen Alkohol wie das eingesetzte Bier und weniger als 2 Bittereinheiten und eine Farbe von weniger als 0,1° SRM aufweist, wird isoliert;
(c) das Permeat wird mit einer wirksamen Menge eines Bitterstoffes, um das angestrebte bittere Aroma zu erzielen, versetzt;
(d) das Permeat wird mit einer wirksamen Menge an Dextrinen mit hohem und mittlerem Molekulargewicht versetzt, um ihm Körper und Trockenheit zu verleihen; und
(e) das Permeat wird mit einer wirksamen Menge einer natürlichen Bierschaumbildungskomponente versetzt, wodurch man ein farbloses, klares Bier erhält.

2. Verfahren nach Anspruch 1, wobei es sich bei der Membran um eine Polyamid/Polysulfon-Verbundmembran handelt.

3. Verfahren nach Anspruch 1 oder 2, wobei die Menge des zugesetzten Bitterstoffes ausreicht, um dem fertigen Bier einen Wert von 4 bis 40 Bittereinheiten zu verleihen.

4. Verfahren nach den Ansprüchen 1, 2 oder 3, wobei der Gehalt an Dextrinen mit hohem und mittlerem Molekulargewicht auf 0,5 bis 3 Gew.-% des fertigen Biers erhöht wird.

5. Verfahren nach einem der vorstehenden Ansprüche, wobei das Einsatzbier aus 80-100 % blassem Malz gebraut ist und wobei das Einsatzbier eine Farbe von 4° bis 5° SRM aufweist.

6. Verfahren zur Herstellung eines nicht-alkoholischen Malzgetränks, umfassend folgende Stufen:
(a) Einsatzbier mit 3 bis 7 % (Gew./Gew.) Alkohol und einer Farbe von 4° bis 5° SRM wird unter Verwendung einer Membran mit einem MWCO-Wert von etwa 300 ultrafiltriert, wodurch man ein Retentat mit einem Alkoholgehalt von etwa 3 bis 7 % (Gew.-/Gew.) erhält;
(b) das Retentat wird mit einem Wasser enthaltenden Verdünnungsmittel verdünnt;
(c) die Konzentration der Dextrine mit hohem und mittlerem Molekulargewicht im verdünnten Retentat wird erhöht; und
(d) der Alkoholgehalt wird gegebenenfalls auf weniger als 0,5 % (Vol./Vol.) eingestellt, wodurch man ein nicht-alkoholisches Malzgetränk erhält.

7. Verfahren nach Anspruch 6, wobei die Konzentration an Glucose und an Dextrinen mit niederem und mittlerem Molekulargewicht im Retentat durch Zugabe von Glucoamylase zum Retentat erhöht wird.

8. Verfahren nach Anspruch 6, wobei die Konzentration an Glucose und Dextrinen mit niedrigem und mittlerem Molekulargewicht im Retentat durch Zugabe eines 26 DE-Sirups erhöht wird.

9. Verfahren nach einem der Ansprüche 6 bis 8, wobei der Gehalt an Dextrinen mit mittlerem Molekulargewicht im verdünnten Retentat auf 1 bis 5 Gew.-% erhöht wird.

10. Verfahren zur Verbesserung des Körpers und der Trockenheit eines nicht-alkoholischen Malzgetränks, umfassend die Zugabe einer wirksamen Menge an Dextrinen mit mittlerem Molekulargewicht zum nicht-alkoholischen Malzgetränk.

11. Verfahren nach Anspruch 10, umfassend die Zugabe von 1 bis 5 Gew.-% Dextrinen mit mittlerem Molekulargewicht.

12. Verfahren zur Herstellung eines farblosen Biers, umfassend die Herstellung eines farblosen klaren Biers nach einem der Ansprüche 1 bis 5 und die Zugabe eines Bierfärbemittels.

## Revendications

1. Procédé de fabrication de bière incolore et limpide, qui comprend :
(a) le fait de soumettre une bière de départ, qui contient de 3 à 7 % en poids d'alcool et présente une amertume de 20 à 50 unités d'amertume et une couleur de 4 à 5 SRM, à une ultrafiltration, sous une pression de 206 à 1310 kPa (30 à 190 livres par pouce carré), en utilisant une membrane dont le seuil de coupure en poids moléculaire (MWCO) vaut environ 300, pour obtenir un rétentat et un perméat ;
(b) le fait d'isoler le perméat, qui présente à peu près le même degré d'alcool que ladite bière de départ, moins de 2 unités d'amertume et une couleur de moins de 0,1 SRM ;
(c) le fait d'ajouter au perméat une quantité efficace d'un agent d'amertume, afin d'obtenir l'arôme amer voulu ;
(d) le fait d'ajouter au perméat une quantité efficace de dextrines grandes et intermédiaires, afin d'ajouter du corps et de la sécheresse ;
(e) et le fait d'ajouter au perméat une quantité efficace de composant moussant naturel pour bière, afin de produire une bière incolore et limpide.

2. Procédé selon la revendication 1, dans lequel la membrane est une membrane en composite polyamide/polysulfone.

3. Procédé selon la revendication 1 ou 2, dans lequel la quantité d'agent d'amertume est suffisante pour donner à la bière finie une amertume de 4 à 40 unités.

4. Procédé selon la revendication 1, 2 ou 3, dans lequel la teneur en dextrines grandes et intermédiaires est augmentée jusqu'à une valeur de 0,5 à 3 % en poids dans la bière finie.

5. Procédé selon l'une quelconque des revendications précédentes, dans lequel la bière de départ est brassée à partir de 80 à 100 % de malt pâle et dans lequel la bière de départ a une couleur de 4 à 5 SRM.

6. Procédé de production d'une boisson maltée non alcoolisée, qui comprend :
(a) le fait de soumettre une bière de départ, qui contient de 3 à 7 % en poids d'alcool et présente une couleur de 4 à 5 SRM, à une ultrafiltration, en utilisant une membrane dotée d'un MWCO d'environ 300, pour obtenir un rétentat contenant à peu près de 3 à 7 % en poids d'alcool ;
(b) le fait de diluer le rétentat avec un diluant comprenant de l'eau ;
(c) le fait d'augmenter la concentration de dextrines de grande taille et de taille intermédiaire dans le rétentat dilué ;
(d) et le fait d'ajuster la teneur en alcool, si nécessaire, à moins de 0,5 % en volume, pour obtenir une boisson maltée non alcoolisée.

7. Procédé selon la revendication 6, dans lequel les concentrations de glucose et de dextrines petites et intermédiaires dans le rétentat sont accrues par adjonction de glucoamylase au rétentat.

8. Procédé selon la revendication 6, dans lequel les concentrations de glucose et de dextrines petites et intermédiaires dans le rétentat sont accrues par adjonction d'un sirop à 26 DE (équivalent dextrose).

9. Procédé selon l'une quelconque des revendications 6 à 8, dans lequel la teneur en dextrines intermédiaires du rétentat dilué est augmentée jusqu'à une valeur de 1 à 5% en poids.

10. Procédé d'amélioration du corps et de la sécheresse d'une boisson maltée non alcoolisée, comprenant l'adjonction d'une quantité efficace de dextrines intermédiaires à ladite boisson maltée non alcoolisée.

11. Procédé selon la revendication 10, comprenant l'adjonction de 1 à 5% en poids de dextrines intermédiaires.

12. Procédé de production d'une bière colorée comprenant la préparation d'une bière incolore et limpide, par un procédé selon l'une quelconque des revendications 1 à 5, et l'adjonction d'un colorant pour bière.
